# EUROPEAN PATENT APPLICATION

(11) **EP 3 427 810 A1**
(43) Date of publication of application: **16.01.2019**
(21) Application number: 17180593.0
(22) Date of filing: 10.07.2017
(51) Int. Cl.: B01D 46/00, B01D 46/24

(54) **A FILTER SYSTEM FOR ACCOMMODATING A FILTER ELEMENT IN A HOUSING ELEMENT**

(71) Applicant: MANN+HUMMEL GmbH, 71636 Ludwigsburg (DE)
(72) Inventor: Aragbatagangapa Eswarapa, Suresh, 560073 Bangalore (IN); Antomon, Chowalloor Rapheal, 560058 Bangalore (IN); Savanur Raghavendra Rao, Srikanth, 560085 Bangalore (IN); Kumar Henchinamane Channabasappa, 560086 Bangalore (IN)
(74) Representative: Nickolaus, Mathias

(57) **Abstract**

The invention relates to a filter system (100) for accommodating a filter element (10) in a housing (110), in particular an air filter system for a combustion engine of a vehicle, comprising the housing (110) with a first housing shell (120) and a second housing shell (140), and a secondary element (40) in the housing (110), wherein the filter element (10) surrounds the secondary element (40). The secondary element (40) comprises a center pipe (42) as a supporting structure for the filter element (10), the center pipe (42) providing openings (54) for a radial fluid flow; a filter medium (44), being tightly arranged at least covering the openings (54) on a radially outer surface (52) of the center pipe (42). The filter medium (44) is fixedly connected to the outer surface (52) of the center pipe (42).

## Description

### Technical Field

The invention relates to a filter system for accommodating a filter element in a housing, in particular an air filter system for a combustion engine of a vehicle, comprising a secondary element in the housing.

### Prior Art

US 5,730,769 discloses an air filter whose filter insert in a metal-free embodiment can be disposed of without any difficulty and which is compact in construction. The filter insert is supported with a closed end face on the cover of the housing. This supporting takes place via protuberances which lie adjacent the inner wall. In this way a force-keyed connection is achieved and the filter insert is axially secured. A secondary element is arranged inside the center tube. This secondary element has the characteristic of preventing falling dirt, dust or the like from entering the clean air region of the filter when the filter insert is exchanged and of protecting the motor against dust damage when the filter paper of the main cartridge is damaged. The secondary element is not replaced every time the filter insert is exchanged; instead, it is only renewed after several filter exchange cycles. The secondary element is inserted in the center tube and is releasably attached to the center tube via the front end plate. In order that this secondary element is fixed in the installed position, the filter insert, i.e. the main cartridge, is provided with a stop surface which is oriented toward the secondary element and against which the secondary element lies. The side of the stop surface which faces the cover is provided with protuberances which support it with respect to the cover.

### Disclosure of the Invention

It is an object of the invention to provide a filter system with a secondary element, in particular for air filter systems of combustion engines, in particular for vehicles, exhibiting a cost effective and compact design of the filter system.

It is a further object of the invention to provide a secondary element for such a filter system.

This object is achieved by a filter system for accommodating a filter element in a housing, comprising a secondary element in the housing, wherein the filter element surrounds the secondary element, the secondary element comprising a center pipe as a supporting structure for the filter element, the center pipe providing openings for a radial fluid flow; a filter medium, being tightly arranged at least covering the openings on a radially outer surface of the center pipe, wherein the filter medium is fixedly connected to the outer surface of the center pipe.

The other claims, the description and the drawings describe advantageous embodiments of the invention.

According to a first aspect of the invention a filter system for accommodating a filter element in a housing, in particular an air filter system for a combustion engine of a vehicle, is proposed, comprising the housing with a first housing shell and a second housing shell, and a secondary element in the housing, wherein the filter element surrounds the secondary element. The secondary element comprises a center pipe as a supporting structure for the filter element, the center pipe providing openings for a radial fluid flow; a filter medium, being tightly arranged at least covering the openings on a radially outer surface of the center pipe. The filter medium is fixedly connected to the outer surface of the center pipe.

Advantageously the inventive filter system comprises the secondary element which is part of the housing. The secondary element may be connected to the first housing shell by clipping it into an outlet tube of the first housing shell, wherein using a gasket for air tight connection. Alternatively the secondary element may be fixed to the first housing shell by welding or cementing. The secondary element may serve for accommodating and supporting the filter element in the housing. The secondary element comprises the center pipe as the supporting structure for the filter element which prevents collapsing of a bellow of the filter element. The center pipe, which may be manufactured tube-like, provides openings in its wall in order that the filtered air may flow to the clean side of the filter system.

An additional filter medium, which serves as a safety element when changing the main filter element, in order to prevent that dust may enter the clean side of the filter system, is attached to the center pipe such that the openings are tightly covered by the filter medium. The filter medium may be fixedly connected to the outer surface of the center pipe. Thus the filter medium as safety element is integrated into the secondary element by, e.g., welding fleece material as the filter medium onto the center pipe. Thus a cost effective and compact solution is given for a filter system with the secondary element accommodating the filter element by reducing additional parts of the filter system and integration of the safety feature. The secondary element thus provides structural stability as well as a cushioning effect to the filter element. This cushioning effect to the filter element may be achieved by welding the fleece band as a filter medium onto the center pipe without leakage, maintaining a gap between the fleece band and the filter element. Cushioning reduces the effects of vibrations onto the filter bellow thus enlarging duration of life of the filter bellow. The inventive secondary element thus allows for reducing overall dimensions of the filter system and making it compact in design. Further costs of the filter system are reduced by reducing the number of separate parts of the filter system.

According to an advantageous embodiment the center pipe may provide a rib like structure, where ribs and openings are arranged consecutively. The ribs provide structural stability of the center pipe against collapsing of the filter bellow due to fluid-dynamical pressure of the flowing air. The filtered air may enter inside the center pipe into the clean side of the filter system through the openings, where the number and size of the openings is designed according to the wished fluid-dynamical resistance for air flow versus stability of the center pipe and thus the secondary element for supporting the filter element.

According to an advantageous embodiment the filter medium may be sealed to the center pipe by circumferential sealing lines on both sides of the rib in an axial direction. The filter medium acting as a safety element of the filter system preventing dust to enter the clean side when changing the filter element may advantageously be sealed to the ribs of the center pipe such that the filter medium is air tightly fixed to the center pipe.

Circumferential sealing lines around the center pipe between the openings thus may guarantee this air tight fixture of the filter medium.

According to an advantageous embodiment the filter medium may be fixed by circumferential welding lines to the center pipe. An appropriate means for sealing the filter medium to the center pipe may be welding lines, particularly if the filter medium may be some fleece material and the center pipe is manufactured by some plastic material through blow molding. By welding an air tight fixture of the filter medium onto the center pipe may be achieved conveniently and cost effectively.

According to an advantageous embodiment the welding lines may be provided on both sides of the rib in the axial direction. By welding circumferentially around the center pipe between the openings of the center pipe air tight fixture of the filter medium onto the center pipe may be achieved conveniently and cost effectively.

According to an advantageous embodiment the filter medium may be arranged on the center pipe such that the filter medium provides at least one protrusion arranged at a rib and protruding in an outer radial direction. The protrusion, such as, e.g., a bump formed by the filter medium, thus provides structural stability as well as a cushioning effect to the filter element. This cushioning effect to the filter element may be achieved by welding a fleece band as a filter medium onto the center pipe without leakage, maintaining a gap between the fleece band and the filter element. The protrusion may be a single bump, which e.g. may be arranged distributed on the outer surface of the secondary element. Alternatively the protrusion may also be provided ring-like shaped circumferentially around the center pipe.

According to an advantageous embodiment, the filter medium may be fixed circumferentially tightly to the center pipe surrounding the protrusion. By fixing the filter medium surrounding the protrusion, the protrusion may be stabilized in the principally flexible filter medium, but also sealed to the center pipe such that even if abrasion occurs during operation of the filter system, the filter medium is fixed air tightly to the center pipe ensuring a tight cover of the openings by the filter medium.

According to an advantageous embodiment the protrusion may be configured as a ring arranged circumferentially on the outer surface of the center pipe. By this way a homogeneous cushioning effect for the filter element around the center pipe may be provided. Providing a ring-shaped protrusion may be a very convenient way of providing protrusions because this may be achieved by compressing the filter medium in an axial direction and fixing the filter medium to the center pipe.

According to an advantageous embodiment the filter medium may be fixed circumferentially tightly to the center pipe on both sides of the protrusion in the axial direction. By fixing the filter medium circumferentially tightly to the center pipe on both sides of the protrusion in the axial direction, the protrusion may be stabilized in the principally flexible filter medium, but also sealed to the center pipe such that even if abrasion occurs during operation of the filter system, the filter medium is fixed air tightly to the center pipe ensuring a tight cover of the openings by the filter medium.

According to an advantageous embodiment the filter medium may be at least partly integrated in the center pipe. Being part of the center pipe provides a stable fixture of the filter medium to the center pipe as well as it enables a sealing of the filter medium to the center pipe in a very convenient manner. Thus air tight functioning of the filter medium as a safety element may be guaranteed. Additional stabilization of the secondary element as such may also be achieved by this way.

According to an advantageous embodiment the filter medium may be fixed to the outer surface of the center pipe by a fixing structure located radially outside of the filter medium. For fixture of the filter medium to the center pipe a separate fixing structure may be provided which then may be fixed by welding or gluing to the center pipe. Alternatively the fixing structure may also be part of the center pipe, by manufacturing both parts together, e.g. by blow molding.

According to an advantageous embodiment the fixing structure may provide at least one protrusion protruding in an outer radial direction. The at least one protrusion may be some distance element protruding in an outer radial direction. The protrusion, such as, e.g., a bump formed by the fixing structure, thus provides structural stability as well as a some kind of supporting effect to the filter element in order to prevent collapsing of the filter bellow under the fluid dynamical pressure of the flowing air. The protrusion may be a single bump, which e.g. may arranged distributed on the outer surface of the secondary element. Alternatively the protrusion may also be provided ring-like shaped circumferentially around the center pipe.

According to an advantageous embodiment the protrusion may be configured as a ring arranged circumferentially on the outer surface of the fixing structure. By this way a homogeneous supporting effect for the filter element around the center pipe may be provided. Providing a ring-shaped protrusion may be a very convenient way of providing protrusions in a blow molding manufacturing process.

According to an advantageous embodiment the fixing structure may be part of the center pipe. The fixing structure may be part of the center pipe, by manufacturing both parts together, e.g. by blow molding.

According to an advantageous embodiment the center pipe may be manufactured by a molding process and the filter medium is at least partly overmolded on the outer surface of the center pipe. This solution to integration of the filter medium into the center pipe provides a very convenient and cost effective way of integrating the filter medium as it may be achieved in one manufacturing process of the center pipe. Also the filter medium may be fixed air tightly to the center pipe in a very effective manner. Advantageous stability of the secondary element is thus easily achievable.

According to an advantageous embodiment the filter medium may be a fleece band. A fleece band may be a convenient choice as a filter medium for a safety element, as it is also a material widely used and available. It is also a very cost effective solution for an integrated secondary element. A fleece band is convenient to handle in a blow molding process, e.g., which makes an overmolded solution for the integrated safety element very attractive for use.

According to another aspect of the invention a secondary element for accommodating a filter element of a filter system in a housing, in particular an air filter system for a combustion engine of a vehicle, is proposed.

The secondary element may be connected to the housing by e.g. a catching mechanism in a clips-like manner to an outlet tube of the housing, wherein using a gasket for air tight connection. Alternatively the secondary element may be fixed to the first housing shell by welding or cementing. The secondary element may serve for accommodating and supporting the filter element in the housing. The secondary element may comprise a center pipe as the supporting structure for the filter element which prevents collapsing of a bellow of the filter element. The center pipe, which may be manufactured tube-like, may provide openings in its wall in order that the filtered air may flow to the clean side of the filter system.

An additional filter medium, which may serve as a safety element when changing the main filter element, in order to prevent that dust may enter the clean side of the filter system, may be attached to the center pipe such that the openings are tightly covered by the filter medium. The filter medium may be fixedly connected to the outer surface of the center pipe. Thus the filter medium as safety element is integrated into the secondary element by, e.g., welding fleece material as the filter medium onto the center pipe. Thus a cost effective and compact solution may be given for a filter system with the secondary element accommodating the filter element by reducing additional parts of the filter system and integration of the safety feature.

### Brief Description of the Drawings

The present invention together with the above-mentioned and other objects and advantages may best be understood from the following detailed description of the embodiments, but not restricted to the embodiments, wherein is shown in:
- Figure 1: in a sectional view an example embodiment of a filter system according to the invention, with a filter element surrounding a secondary element, comprising a center pipe with a filter medium fixedly connected to the center pipe;

- Figure 2: in an enlarged partial sectional view the example embodiment of Figure 1 with details of the construction of the secondary element;
- Figure 3: in a sectional view a further example embodiment of a filter system according to the invention, with a filter element surrounding a secondary element, comprising a center pipe with an overmolded filter medium; and
- Figure 4: in an enlarged partial sectional view the example embodiment of Figure 3 with details of the construction of the secondary element.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

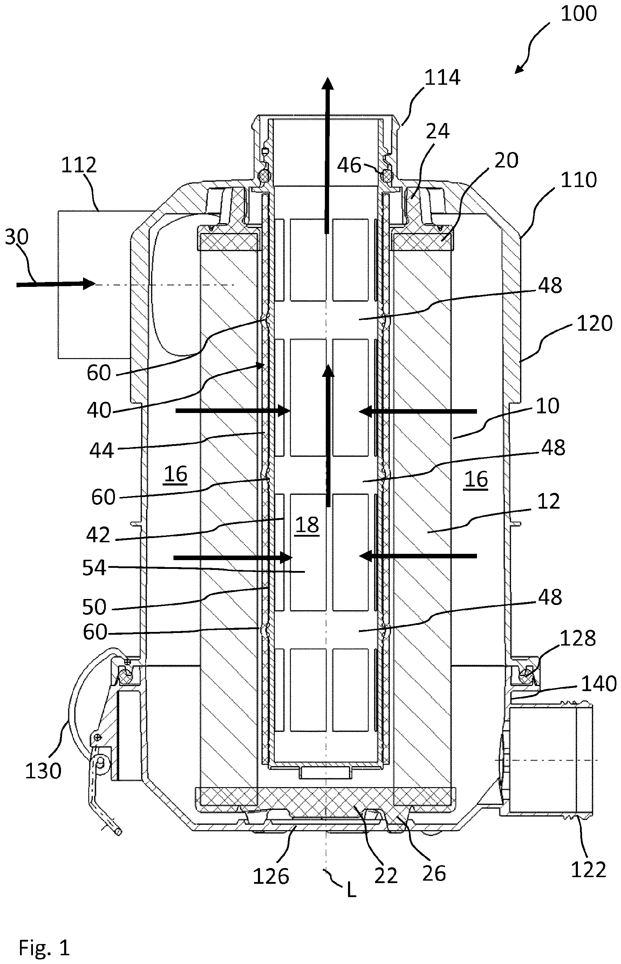

Figure 1 depicts in a sectional view an example embodiment of a filter system 100 according to the invention, with a filter element 10 surrounding a secondary element 40, comprising a center pipe 42 with a filter medium 44 fixedly connected to the center pipe 42. The filter system 100 is provided for accommodating the filter element 10 in the housing 110, represents in particular an air filter system for a combustion engine of a vehicle. The filter system 100 comprises the housing 110 with a first housing shell 120 and a second housing shell 140, further the secondary element 40 in the housing 110. The housing 110 comprises an air inlet 112, an air outlet 114 and a dust outlet 122, wherein gathered dust may be disposed from time to time.

The filter element 10 surrounds the secondary element 40. The secondary element 40 comprises the center pipe 42 as a supporting structure for the filter element 10. The center pipe 42 provides openings 54 for a radial fluid flow. The filter medium 44 is tightly arranged at least covering the openings 54 on a radially outer surface 52 of the center pipe 42. Therefore the filter medium 44 is fixedly connected to the outer surface 52 of the wall 50 of the center pipe 42.

The filter medium 44 may be a fleece band and serves to prevent dust or other particles to enter the clean side 18 of the filter system when changing the filter element 10.

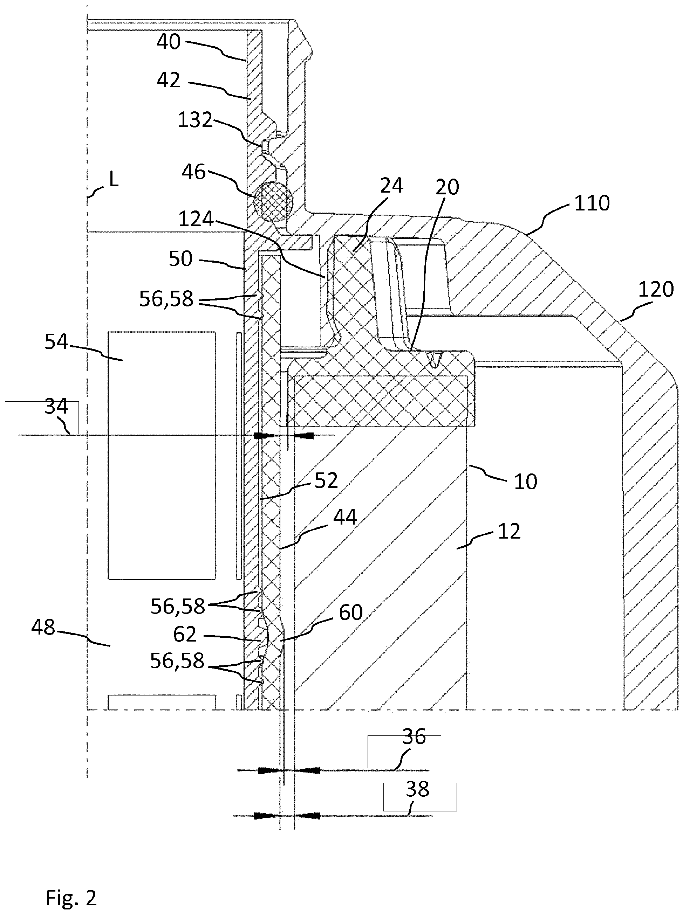

The center pipe 42 provides a rib like structure, where ribs 48 and openings 54 are arranged consecutively, in order to give stability to the secondary element 40 and let the filtered air flow to the clean side 18 of the filter system 100 inside the secondary element 40. The filter medium 44 is sealed to the center pipe 42 by circumferential sealing lines 56 on both sides of the rib 48 in an axial direction L, wherein the sealing lines 56 are represented by welding lines 58, fixing the filter medium 44 onto the outer radial surface 52 of the center pipe 42. The welding lines 58 are provided on both sides of the rib 48 in the axial direction L, as can be seen in an enlarged view in Figure 2.

The filter medium 44 is arranged on the center pipe 42 such that the filter medium 44 provides protrusions 60 arranged at the ribs 48 and protruding in an outer radial direction. The protrusions 60 serve for stabilizing the mounting of the filter element 10 on the secondary element 40 and provide a cushioning effect to the filter element 10 due to the inherent flexibility of the filter medium 44 they are formed of. Cushioning reduces the effects of vibrations onto the filter bellow 12 thus enlarging duration of life of the filter bellow 12. The filter medium 44 may be fixed circumferentially tightly to the center pipe 42 surrounding the protrusion 60. In the embodiment shown in Figures 1 and 2, the protrusions 60 are configured as rings arranged circumferentially on the outer surface 52 of the center pipe 42. Therefore the filter medium 44 is fixed circumferentially tightly to the center pipe 42 on both sides of the protrusion 60 in the axial direction L.

The filter element 10 comprises a hollow cylindrical filter bellow 12 which ends in end plates 20, 22 on both sides in axial direction L. The filter bellow 12 may comprise a pleated filter medium, wherein the end plates 20, 22 may be manufactured e.g. from polyurethane foam (PUR). The lower end plate 22 comprises an integrated gasket 26 for axial sealing of the filter element 10 to the housing 110, wherein the upper end plate 20 comprises an integrated gasket 24 for axial and radial sealing to the housing 110.

For assembly of the filter system 100, the secondary element 40 may be assembled in the first housing shell 120, e.g. by a catching mechanism 132 in a clips-like manner of the secondary element 40 inside the outlet 114, sealing by an O-ring gasket 46. Next the filter element 10 may be slipped on the secondary element 40 until the gasket 24 of the end plate 20 touches the inner side of the first housing shell 120. The secondary element 40 supports the filter element 10 and prevents the filter bellow 12 from collapsing due to the fluid dynamical pressure of the air flow. Then the second housing shell 140 may be put on the first housing shell 120, sealed by an O-ring gasket 128 and thus the housing 110 may be closed with axial clamps 130. The filter element 10 is then fixed in the housing 110 by the axial sealing of the gaskets 26 of the lower end plate 22 against the bottom 126 of the second housing shell 140 and the axial and radial sealing of the gaskets 24 at the upper end plate 20.

The flow of the air being filtered is sketched by the arrows 30 (only one arrow marked), the air entering the filter system 100 at the inlet 112, flowing from the raw side of the filter system 100 inside the housing 110 radially through the filter bellow 12 to the clean side 18 inside the secondary element 40. Inside the secondary element 40 the filtered air is flowing in axial direction L through the housing 110 exiting the filter system 100 through the outlet 114.

Figure 2 shows in an enlarged partial sectional view the example embodiment of Figure 1 with details of the construction of the secondary element 40.

The center pipe 42 of the secondary element 40 is connected to the first housing shell 120 of the housing 110 via a catching mechanism 132 in a clips-like manner providing a fixed assembly of the center pipe 42 to the first housing shell 120. The center pipe 42 is sealed to the first housing shell 120 with an O-ring shaped gasket 46.

The filter medium 44 is tightly arranged at least covering the openings 54 on a radially outer surface 52 of the center pipe 42. Therefore the filter medium 44 is fixedly connected to the outer surface 52 of the wall 50 of the center pipe 42 via circumferential sealing lines 56 on both sides of the rib 48 in an axial direction L, which sealing lines 56 are represented as circumferential welding lines 58 around the center pipe 42, fixing the filter medium 44 onto the outer radial surface 52 of the center pipe 42. The welding lines 58 are provided on both sides of the rib 48 in the axial direction L, as can be seen in an enlarged view in Figure 2.

The filter medium 44 is arranged on the center pipe 42 such that the filter medium 44 provides protrusions 60 arranged at the ribs 48 and protruding in an outer radial direction. The protrusions 60 are supported from the outer radial surface 52 of the center pipe 42 by a protrusion support 62 in order to arrange the protrusion 60 at a fixed position and facilitate the generation of the protrusion 60 by the filter medium 44. The protrusion support 62 may be a ring-shaped structure circumferentially around the center pipe 42. The filter medium 44 may be fixed circumferentially tightly to the center pipe 42 surrounding the protrusion 60. In the embodiment shown in Figures 1 and 2, the protrusions 60 are configured as rings arranged circumferentially on the outer surface 52 of the center pipe 42. Therefore the filter medium 44 is fixed circumferentially tightly to the center pipe 42 on both sides of the protrusion 60 in the axial direction L.

The filter element 10 is assembled in the first housing shell 120 by pressing the gasket 24 of the upper end plate 20 against the first housing shell 120 in axial direction L and pressing the gasket 24 in radial direction against a radial sealing structure 124 as part of the first housing shell 120.

In order to provide the desired cushioning effect a gap 38 between the outer radial surface of the filter medium 44 and the filter bellow 12 may typically measure 2 mm, whereas a gap 36 between a peak of the protrusion 60 and the filter bellow may typically measure 1.4 mm and a gap 34 between the surface of the filter medium 44 and the inner radius of the end plate 20 may typically measure 1.1 mm.

Thus, the filter bellow 12 may be advantageously supported by the cushioning effect against vibrations of the filter system 100 during operation in real life.

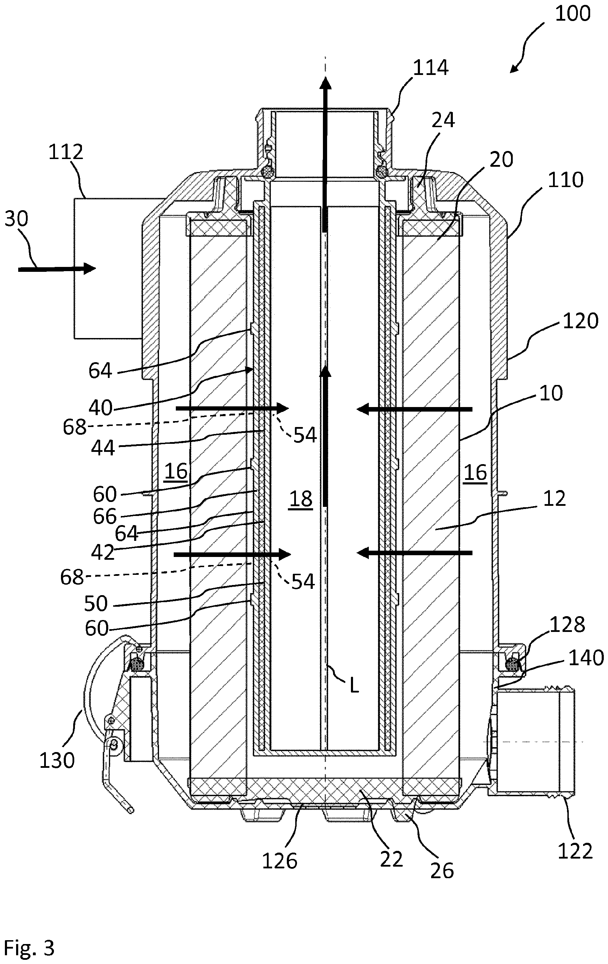

Figure 3 depicts in a sectional view a further example embodiment of a filter system 100 according to the invention, with a filter element 10 surrounding a secondary element 40, comprising a center pipe 42 with an overmolded filter medium 44.

The filter medium 44 is at least partly integrated in the center pipe 42. The filter medium 44 is fixed to the outer surface 52 of the center pipe 42 by a fixing structure 66 located radially outside of the filter medium 44. The fixing structure 66 hereby is part of the center pipe 42. Advantageously the center pipe 42 may be manufactured by a molding process and the filter medium 44 may at least partly be overmolded on the outer surface 52 of the center pipe 42. Thus the filter medium 44 is tightly fixedly connected to the center pipe 42.

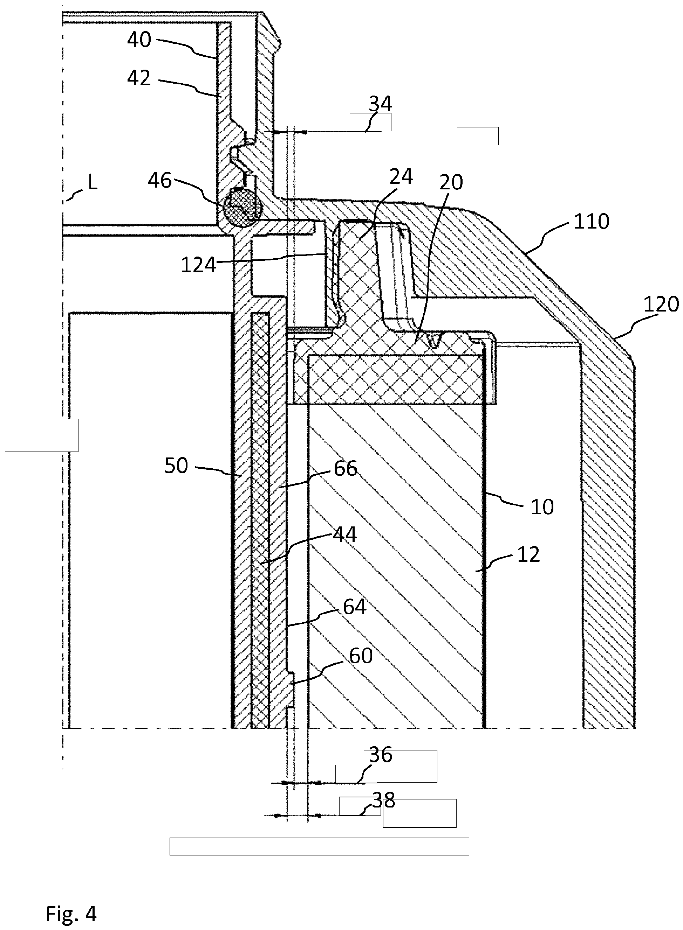

The center pipe 42 may advantageously exhibit a rib like structure with openings 54 for the filtered air to flow into the clean side 18 of the filter system 100. The fixing structure therefore may exhibit openings 68 just in the same position where in the center pipe 42 are the corresponding openings 54. In Figures 3 and 4 the openings 54, 68 are not shown and therefore indicated by dashed line references 54, 68.

The fixing structure 66 provides protrusions 60 protruding in an outer radial direction, where the protrusions 60 are configured as rings arranged circumferentially on the outer surface 64 of the fixing structure 66. The protrusions 60 are conveniently formed during the molding process of the center pipe 42 together with forming the fixing structure 66 and are part of the fixing structure 66.

Assembly of the filter element 10 in the housing 110 is performed in the same way as described for the embodiment shown in Figures 1 and 2 and therefore not repeated here.

Figure 4 shows in an enlarged partial sectional view the example embodiment of Figure 3 with details of the construction of the secondary element 40.

Assembly of the secondary element 40 in the first housing shell 120 may be performed in the same way as described for the embodiment shown in Figures 1 and 2. Also assembly of the filter element 10 in the housing 110 is performed in the same way as described for the embodiment shown in Figures 1 and 2.

In Figure 4 the overmolded filter medium 44 is covered in total length by the fixing structure 66 as part of the overmolding material, formed e.g. in the blow molding process for manufacturing the center pipe 42. The protrusions 60 are formed as ring-shaped structure circumferentially around the center pipe 42 and are just formed during the molding process, too.

In order to provide the desired supporting effect a gap 38 between the outer radial surface of the fixing structure 66 and the filter bellow 12 may typically measure 3 mm, whereas a gap 36 between a peak of the protrusion 60 and the filter bellow may typically measure 2 mm and a gap 34 between the surface of the filter medium 44 and the inner radius of the end plate 20 may typically measure 1.1 mm.

Thus, the filter bellow 12 may be advantageously supported against vibrations of the filter system 100 during operation in real life.

## Claims

1. A filter system (100) for accommodating a filter element (10) in a housing (110), in particular an air filter system for a combustion engine of a vehicle, comprising the housing (110) with a first housing shell (120) and a second housing shell (140),
a secondary element (40) in the housing (110), wherein the filter element (10) surrounds the secondary element (40), the secondary element (40) comprising
a center pipe (42) as a supporting structure for the filter element (10), the center pipe (42) providing openings (54) for a radial fluid flow;
a filter medium (44), being tightly arranged at least covering the openings (54) on a radially outer surface (52) of the center pipe (42),
wherein the filter medium (44) is fixedly connected to the outer surface (52) of the center pipe (42).

2. The filter system according to claim 1, the center pipe (42) providing a rib like structure, where ribs (48) and openings (54) are arranged consecutively.

3. The filter system according to claim 1 or 2, wherein the filter medium (44) is sealed to the center pipe (42) by circumferential sealing lines (56) on both sides of the rib (48) in an axial direction (L).

4. The filter system according to any one of the preceding claims, wherein the filter medium (44) is fixed by circumferential welding lines (58) to the center pipe (42).

5. The filter system according to claim 4, wherein the welding lines (58) are provided on both sides of the rib (48) in the axial direction (L).

6. The filter system according to any one of the preceding claims, wherein the filter medium (44) is arranged on the center pipe (42) such that the filter medium (44) provides at least one protrusion (60) arranged at a rib (48) and protruding in an outer radial direction.

7. The filter system according to claim 6, wherein the filter medium (44) is fixed circumferentially tightly to the center pipe (42) surrounding the protrusion (60).

8. The filter system according to claim 6, wherein the protrusion (60) is configured as a ring arranged circumferentially on the outer surface (52) of the center pipe (42).

9. The filter system according to claim 8, wherein the filter medium (44) is fixed circumferentially tightly to the center pipe (42) on both sides of the protrusion (60) in the axial direction (L).

10. The filter system according to claim 1 or 2, wherein the filter medium (44) is at least partly integrated in the center pipe (42).

11. The filter system according to claim 10, wherein the filter medium (44) is fixed to the outer surface (52) of the center pipe (42) by a fixing structure (66) located radially outside of the filter medium (44).

12. The filter system according to claim 10 or 11, wherein the fixing structure (66) provides at least one protrusion (60) protruding in an outer radial direction.

13. The filter system according to claim 12, wherein the protrusion (60) is configured as a ring arranged circumferentially on the outer surface (64) of the fixing structure (66).

14. The filter system according to any one of the claims 10 to 13, wherein the fixing structure (66) is part of the center pipe (42).

15. The filter system according to any one of the claims 10 to 14, wherein the center pipe (42) is manufactured by a molding process and the filter medium (44) is at least partly overmolded on the outer surface (52) of the center pipe (42).

16. The filter system according to any one of the preceding claims, wherein the filter medium (44) is a fleece band.

17. A secondary element (40) for accommodating a filter element (10) of a filter system (100) in a housing (110) according to any one of the preceding claims.
